## Europäisches Patentamt

## European Patent Office

## Office européen des brevets

(11) Veröffentlichungsnummer: **0 053 304**
**A1**

# (12) EUROPÄISCHE PATENTANMELDUNG

(21) Anmeldenummer: **81109589.2**

(22) Anmeldetag: **10.11.81**

(51) Int. Cl.³: **G 01 N 21/85**

(30) Priorität: **28.11.80 DE 3044853**

(43) Veröffentlichungstag der Anmeldung: **09.06.82**
**Patentblatt 82/23**

(84) Benannte Vertragsstaaten: **BE CH DE FR IT LI NL**

(71) Anmelder: **Glander, Siegfried, Wiesenweg 15, D-6232 Bad Soden (DE)**
Anmelder: **Feess, Erich, Jahnstrasse 32, D-6239 Hofheim-Lorsbach (DE)**

(72) Erfinder: **Glander, Siegfried, Wiesenweg 15, D-6232 Bad Soden (DE)**
Erfinder: **Feess, Erich, Jahnstrasse 32, D-6239 Hofheim-Lorsbach (DE)**

(54) **Verfahren und Vorrichtung zum Bestimmen und Einstellen des Wassergehaltes im Nassdampf.**

(57) Gegenstand der Neuerung ist ein Verfahren und eine Vorrichtung zum Messen des siedenden Wasseranteils im dazu im Gleichgewicht befindlichen Sattdampf, d.h. den Wasseranteil im Naßdampf.

Bei der Vorrichtung strömt der Naßdampf durch eine Meßstrecke, die zwischen einem Temperaturstrahler (3) mit konstanter Temperatur weit über der Dampftemperatur und einem Strahlungspyrometer (7) (als Temperaturmeßgerät) angeordnet ist.

Die vom Pyrometer (7) gemessene Temperatur (3) ist abhängig von der Wassertröpfchenmenge in der Meßstrecke und kann dadurch zur Bestimmung des Wassergehaltes des durch die Meßstrecke strömenden Naßdampfes benutzt werden. Mit Hilfe eines Reglers (11) kann automatisch soviel Wasser in den Dampf dosiert (13) werden, daß in der Dampfleitung (1) ein vorgegebener Wassergehalt im Naßdampf eingestellt bzw. daß nach dem Entspannen des Dampfes aus dieser Dampfleitung in einem Dämpfer (2), in dem z.B. ein Textilgut mit Dampf behandelt wird, der Dampf in einen Sattdampf oder in einen Naßdampf mit einem bestimmten Wassergehalt überführt wird.

Verfahren und  Vorrichtung zum Bestimmen und Einstellen des
Wassergehaltes im Naßdampf


Gegenstand der Neuerung ist ein Verfahren und eine Vorrichtung zum
Messen des siedenden Wasseranteils im dazu im Gleichgewicht befindenden
Sattdampf, d. h. den Wasseranteil im Naßdampf.

Beim Fixieren von vorher z. B. bedruckten und getrockneten Geweben ist oft ein gleichmäßiger Sattdampfzustand mit ausreichender Feuchtigkeit eine Voraussetzung für eine hohe und reproduzierbare Farbstoffausbeute. Durch das Einstellen einer Gleichgewichtsfeuchte des Textilmaterials im Dämpfer, durch Lösungs-, Adsorptions- und Reaktionswärmen wird eine unterschiedlich hohe Überhitzung des Dampfes und damit eine unterschiedliche Feuchte hervorgerufen.

Nach dem jetzigen Stand der Technik wird Sattdampf in einem Dampfsättiger ohne jegliche Messung oder durch Wassereinsprühung in Abhängigkeit von der Temperatur erzeugt. Gegen die Überhitzung dieses Dampfes wird wiederum in Abhängigkeit von der Überhitzungstemperatur Wasser zugespritzt und damit dem Dampf die Überhitzungsanthalpie entzogen. Ein zweiter bekannter Weg ist die Regenerierung des überhitzten Dampfes durch Wasserzugabe ohne die Messung von Dampfzustandsgrößen.

Aus der Thermodynamik ist bekannt, daß beim überhitzten Dampf mit der Temperatur und dem Druck und beim gesättigten Dampf mit Druck oder Temperatur das spezifische Volumen und damit die verdampfte Wassermenge pro $m^3$ bestimmbar ist. Bei diesen beiden Zustandsformen des Dampfes gibt es kein Wasser neben dem Dampf

Unterhalb der Grenzkurve im Enthalpie (h), Entropie (S)-Diagramm (auch Mollier-Diagramm genannt) fallen die Isobaren und die Isothermen zusammen und haben als Geraden die Neigung $dh/ds = T$ (T = absulote Temperatur in K).

In diesem Naßdampfbereich ändert sich das spezifische Volumen, das selbstverständlich vom Dampfgehalt abhängt. Der Dampfgehalt ist definiert als:

$$x = \frac{m''}{m' + m''} \quad (I)$$

m' = Masse des siedenden Wassers

m'' = Masse des gesättigten Dampfes

Neben Druck oder Temperatur muß also x bekannt sein, um auch im Naßdampfbereich den Dampf eindeutig beschreiben zu können.

Aus dem h, s-Diagramm folgt, daß gesättigter Dampf von z. B. 7 bar und 165°C beim Entspannen auf z. B. 1 bar noch 143°C warm und damit überhitzt ist. Entspannt man dagegen Naßdampf von 7 bar mit x = 0,96 auf 1 bar, so hat er die Temperatur 100°C und ist Sattdampf. Beim Entspannen von Naßdampf mit 7 bar und einem $x < 0,96$ auf wiederum 1 bar hat der entspannte Dampf wieder 100°C aber ein $x < 1$ und ist damit noch Naßdampf.

Wenn man in der Lage ist, dem Dampf vor dem Entspannen eine definierte Menge Wasser zuzusetzen und damit einen Naßdampf mit vorgegebenem x-Wert zu erzeugen, kann nach dem Entspannen ein Sattdampf bzw. ein Naßdampf mit bekanntem m'-Gehalt erhalten werden. Es bestand daher die Aufgabe, ein Verfahren und eine Vorrichtung zu schaffen, um den Anteil des siedenden Wassers m' im Naßdampf zu messen und diesen Meßwert als Regelgröße zur automatischen Einstellung des gewünschten Wasseranteils zu nutzen.

Zur Lösung dieser Aufgabe wurde nun ein Verfahren zum Bestimmen und Einstellen des Wassergehaltes im Dampf gefunden, dadurch gekennzeichnet, daß man trockenem Dampf Wasser zugibt, die Wassermenge des Naßdampfes durch Absorption von Infrarotstrahlung mißt, den Druck des Dampfes feststellt und die Meßwerte als Regelgröße für die Wasserzugabe benutzt.

Dazu wurde eine Vorrichtung entwickelt, dadurch gekennzeichnet, daß in bzw. an einem Dampfraum mit Dampfein- und -auslaß ein Infrarotstrahler, ein Infrarotempfänger, eine Druckmeßeinrichtung und eine regelbare Wasserzugabeeinrichtung angeordnet sind. Die Meßstrecke zwischen Infrarotstrahler und Infrarotempfänger kann im Dampfleitungsrohr, das z. B. unter 7 oder 16 bar Druck steht aber auch im Dämpfer, in den z. B. ein Textilgut mit dem Medium Dampf behandelt wird, angeordnet werden.

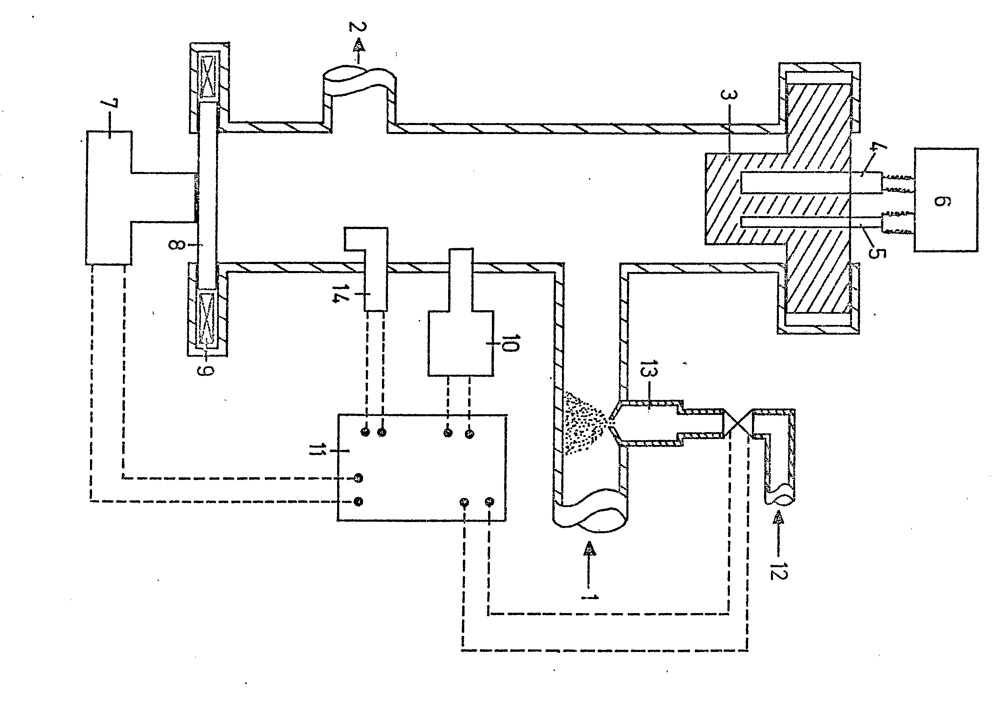

Die Anordnung in der Dampfleitung zeigt die Figur 1.

In die Dampfleitung (1) vor Eintritt in den Dämpfer (2) wird folgende Meßstrecke eingebaut. Ein Metallblock (3) wird mit einer Heizpatrone (4), einem Temperaturfühler (5) und einem Regler (6) auf einer konstanten Temperatur gehalten, die weit über der Dampftemperatur liegt (z. B. 400°C). In einem großen Abstand (z. B. 1 m) wird ein Strahlungspyrometer (7) so befestigt, daß der Meßfleck genau auf den beheizten Metallblock (3) fällt. Das Pyrometer (7) ist hinter einem beheizten (9) Fenster aus z. B. Germanium (8) so angebracht, daß der Meßspiegel des Pyrometers (7) vor dem Dampf und hoher Temperatur geschützt ist. Die Beheizung (9) des Fensters (8) verhindert Kondensatbildung und garantiert eine konstante Temperatur und damit eine konstante Grunddämpfung der IR-Strahlung des Metallblocks (3).

Der Dampf absorbiert die IR-Strahlung nur geringfügig. Die IR-Strahlung wird aber erheblich stärker durch Wassertröpfchen absorbiert. Die angezeigte Temperatur wird unso kleiner, je mehr Wassertröpfchen in der Meßstrecke sind. Die vom Wassergehalt abhängige IR-Dämpfung wird in g Wasser in der Meßstrecke und mit der zusätzlichen Messung des Drucks (10) in Prozent Wasser im Dampf bzw. dem x-Wert der Gleichung (I) geeicht.

In Abhängigkeit von einer vorgegebenen Sollwerteinstellung kann dann mit einem Regler (11) automatisch vor der Meßstrecke Wasser über eine Sprühdüse (13) in die Dampfleitung dosiert werden.

Zur Eichung der Meßwerte als Funktion vom Wassergehalt des Naßdampfes ist ein Temperaturfühler (14) sinnvoll, um den Teil des zugesprühten Wassers, der durch Verdampfung nur die Überhitzung des Dampfes abbaut, zu erkennen (d. h. bis zum Abfall der Überhitzungstemperatur auf die Sättigungstemperatur, die zum Druck gehört).

Mit dieser Anordnung ist es möglich, dem Dampf schon in der Dampfleitung soviel Wasser mitzugeben, daß nach der Entspannung im Dämpfer auf z. B. atmosphärischem Druck der gewünschte Dampfzustand herrscht.

Bei der analogen Anordnung der Meßstrecke im Dampfraum, in den z. B. das Textilgut mit dem Dampf behandelt wird, ist der gewünschte Feuchtegehalt in diesem Dampfraum der einzustellende Sollwert.

Ansprüche:

1. Verfahren zum Bestimmen und Einstellen des Wassergehaltes in Dampf, dadurch gekennzeichnet, daß man trockenem Dampf Wasser zugibt, die Wassermenge des Naßdampfes durch Absorption von Infrarotstrahlung mißt, den Druck dieses Dampfes feststellt und die Meßwerte als Regelgröße für die Wasserzugabe benutzt.

2. Vorrichtung zum Bestimmen und Einstellen des Wassergehaltes in Dampf, dadurch gekennzeichnet, daß in bzw. an einem Dampfraum bildenden Gehäuse mit Zu- und Ableitung für den Dampf ein Infrarotstrahler, ein Infrarotempfänger, eine Druckmeßeinrichtung und eine regelbare Wasserzugabeeinrichtung angeordnet sind.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| Y | US - A - 3 281 597 (SECRETARY OF THE NAVY USA) <br><br> * Insgesamt * | <br><br> 1,2 |
| | -- | |
| Y | FR - A - 2 035 409 (NIPPON KOKAN KABUSHIKI KAISHA) <br><br> * Seite 4, Zeile 27 bis Seite 5, Zeile 10; Figur 1 * <br> & DE - A - 2 006 697 | <br><br> 1,2 |
| | -- | |
| A | FR - A - 829 293 (SCHMIDT'SCHE HEISSDAMPFGESELLSCHAFT) <br><br> * Seite 2, Zeile 23 bis Seite 2, Zeile 88; Figuren 1,2 * | <br><br> 1 |
| | -- | |
| A | FR - A - 855 026 (M. BAUDOT) <br> * Seite 3, Zeilen 10-29; Figur 2 * | |
| | -- | |
| A | DE - B - 1 018 605 (FA. H. KRANTZ) <br> * Seite 3, Zeilen 25-47; Figuren * | |
| | --- | |

**KLASSIFIKATION DER ANMELDUNG** (Int. Cl.³)

G 01 N 21/85

**RECHERCHIERTE SACHGEBIETE** (Int. Cl.³)

G 01 N
G 05 D
F 24 F

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 26-02-1982 | HOUILLON |

EPA form 1503.1 06.78